# FASCICULE DE BREVET EUROPEEN

(11) **EP 1 463 575 B1**
(45) Date de publication et mention de la délivrance du brevet: **13.08.2008**
(21) Numéro de dépôt: 03744392.6
(22) Date de dépôt: 08.01.2003
(51) Int. Cl.: B01D 21/02

(54) **DECANTEUR LAMELLAIRE ET PROCEDE DE NETTOYAGE DE CE DECANTEUR**
LAMELLENABSCHEIDER UND VERFAHREN ZUR REINIGUNG DESSELBEN
LAMELLAR CLARIFIER, AND METHOD FOR CLEANING SAME

(30) Priorité: 08.01.2002 FR 0200156
(43) Date de publication de la demande: 06.10.2004
(73) Titulaire: Innova Environnement, 44150 Ancenis (FR)
(72) Inventeur: BOULANT, Alain, 44380 Pornichet (FR)
(74) Mandataire: Jouanneau, Lionel
(86) Numéro de dépôt international: PCT/FR2003/000036
(87) Numéro de publication internationale: WO 2003/078019

(56) Documents cités:
- DE-A- 4 302 003
- DE-U- 29 623 598
- FR-A- 2 688 416
- FR-A- 2 754 733
- PATENT ABSTRACTS OF JAPAN vol. 1999, no. 5, 31 mai 1999 (1999-05-31) & JP 11 033310 A (NIPPON ENBAIRO KOGYO KK), 9 février 1999 (1999-02-09)

## Description

La présente invention se rapporte à un décanteur lamellaire simplifié et à un procédé de nettoyage de ce décanteur.

On connaît du document FR 2 754 733 un décanteur lamellaire du type comprenant a) un réservoir de liquide à décanter, b) des moyens pour amener ledit liquide dans une zone inférieure dudit réservoir, c) des moyens pour évacuer ledit liquide d'une zone supérieure dudit réservoir, d) une pluralité de plaques de décantation disposées à l'intérieur dudit réservoir, ces plaques étant sensiblement parallèles et régulièrement espacées entre elles de manière à définir une pluralité de passages s'étendant entre lesdites zones inférieure et supérieure, e) des organes tubulaires solidaires desdites plaques, et f) des moyens de fixation pendulaires interposés entre lesdits organes tubulaires et ledit réservoir.

Dans ce décanteur de la technique antérieure, les plaques de décantation sont montées solidaires d'axes de pivotement eux-mêmes montés rotatifs dans des encoches formées dans les parois du réservoir du décanteur.

Les frottements entre ces axes de pivotement et les parois du décanteur étant importants, il faut envisager des moyens suffisamment lourds pour vaincre ces frottements lorsqu'on souhaite modifier l'inclinaison des plaques de décantation.

Outre le fait que de tels moyens demandent un effort de manoeuvre important, ils sont d'une fabrication coûteuse.

La présente invention a pour but de fournir un décanteur simplifié permettant de réduire ces inconvénients.

On atteint ce but de l'invention avec un décanteur lamellaire du type comprenant a) un réservoir de liquide à décanter , b) des moyens pour amener ledit liquide dans une zone inférieure dudit réservoir, c) des moyens pour évacuer ledit liquide d'une zone supérieure dudit réservoir, d) une pluralité de plaques de décantation disposées à l'intérieur dudit réservoir, ces plaques étant parallèles et régulièrement espacées entre elles de manière à définir une pluralité de passages s'étendant entre lesdites zones inférieure et supérieure, e) des organes tubulaires solidaires desdites plaques, et f) des moyens de fixation pendulaires interposés entre lesdits organes tubulaires et ledit réservoir, remarquable en ce que lesdits moyens de fixation pendulaires comprennent des doigts solidaires des parois dudit réservoir, sur lesquels reposent les parois intérieures de chacun desdits organes tubulaires

La coopération de doigts solidaires des parois du réservoir avec les parois intérieures des organes tubulaires constitue une articulation ponctuelle permettant de diminuer considérablement les frottements apparaissant lors du pivotement des plaques, et ainsi d'alléger au maximum la structure permettant d'actionner ces plaques, et donc, finalement, de réaliser un décanteur facile à manoeuvrer et relativement peu coûteux.

Suivant d'autres caractéristiques du décanteur selon l'invention :
- ce décanteur comprend des moyens pour calibrer le flux dudit liquide entre lesdits passages et ladite zone supérieure,
- ce décanteur comprend des moyens pour faire varier de concert l'inclinaison desdites plaques de décantation,
- lesdits moyens de variation d'inclinaison comprennent au moins une barre d'actionnement reliée par une liaison du type pivot glissant auxdites plaques de décantation.

La présente invention se rapporte également à un procédé de nettoyage d'un décanteur conforme à ce qui précède, remarquable en ce qu'il comprend l'étape consistant à placer lesdites plaques de décantation dans une position sensiblement parallèle à la verticale.

La présente invention se rapporte également à un procédé de nettoyage d'un décanteur conforme à ce qui précède, remarquable en ce qu'il comprend l'étape consistant à incliner lesdites plaques de décantation à l'envers par rapport à leur position de fonctionnement.

D'autres caractéristiques et avantages du décanteur selon l'invention apparaîtront à la lecture de la description qui va suivre et à l'examen du dessin annexé, dans lequel :
- la figure 1 est une vue en perspective du décanteur selon l'invention,
- la figure 2 est une vue partielle en coupe selon le plan P de la figure 1 du décanteur de cette figure lorsqu'il se trouve en configuration de fonctionnement,
- la figure 3 est analogue à la figure 2, le décanteur se trouvant dans une première configuration de nettoyage, et
- la figure 4 est analogue à la figure 3, le décanteur se trouvant dans une deuxième configuration de nettoyage.

Sur ces figures, des références identiques désignent des organes ou ensembles d'organes identiques ou analogues.

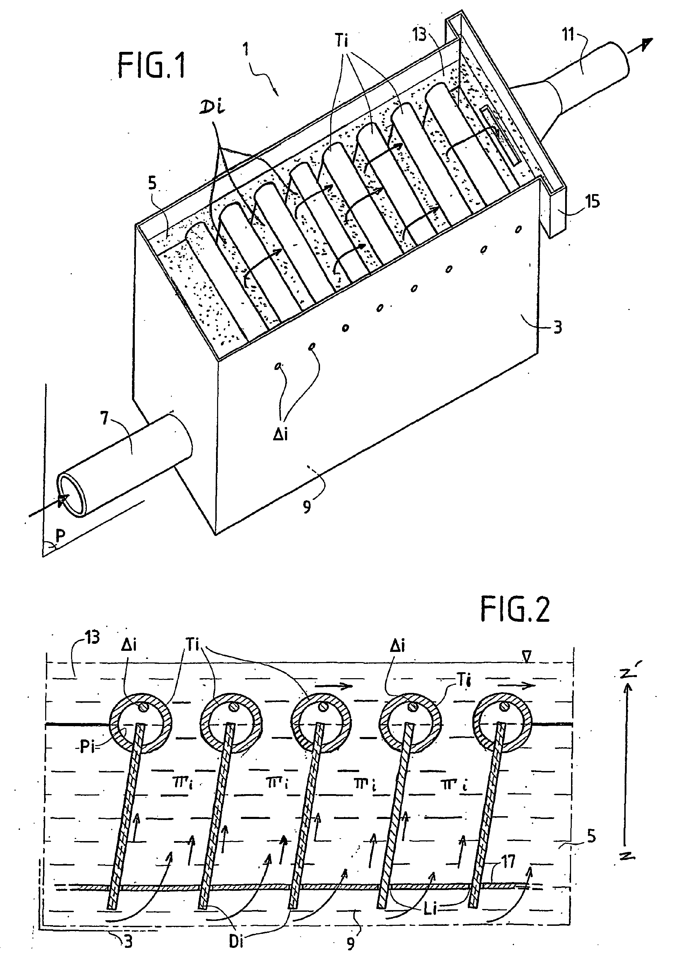

On se reporte à présent à la figure 1, sur laquelle on voit que le décanteur 1 selon l'invention comprend un réservoir 3 de liquide à décanter 5, présentant d'une part une conduite d'arrivée de liquide 7 débouchant dans une zone inférieure 9 du réservoir 3, et d'autre part une conduite d'évacuation de liquide 11 communiquant avec une zone supérieure 13 du réservoir 3 par exemple par l'intermédiaire d'une gouttière 15 de récupération du liquide 5.

A l'intérieur du réservoir 3 se trouvent une pluralité de plaques de décantation Di.

Des organes tubulaires Ti sont solidaires de ces plaques.

On se reporte à présent à la figure 2 pour de plus amples détails sur l'agencement des plaques Di et des organes tubulaires Ti à l'intérieur du réservoir 3.

Comme cela apparaît sur cette figure, les plaques Di sont parallèles et régulièrement espacées entre elles de manière à définir une pluralité de passages ni s'étendant entre les zones inférieure 9 et supérieure 13 du réservoir 3.

Les organes tubulaires Ti sont reliés aux parois du réservoir 3 de manière pendulaire, c'est-à-dire que les parois intérieures Pi de chacun des organes Ti reposent sur des doigts Δi solidaires des parois du réservoir 3.

Chaque organe tubulaire Ti est fendu sur sa longueur de manière à recevoir une plaque Di, des moyens de fixation traditionnels (non représentés) tels que des goupilles permettant de solidariser entre eux ces organes tubulaires et ces plaques.

Le décanteur selon l'invention peut ou non comprendre des moyens pour calibrer le flux de liquide entre les passages ni et la zone supérieure 13 du réservoir 3.

Les plaques Di peuvent par exemple être formées en tôle, et les organes tubulaires Ti peuvent par exemple être formés en matière plastique.

De préférence, ces organes tubulaires sont borgnes à leurs extrémités, c'est-à-dire que deux cloisons ferment la cavité définie par chacun de ces organes au voisinage de ses deux extrémités.

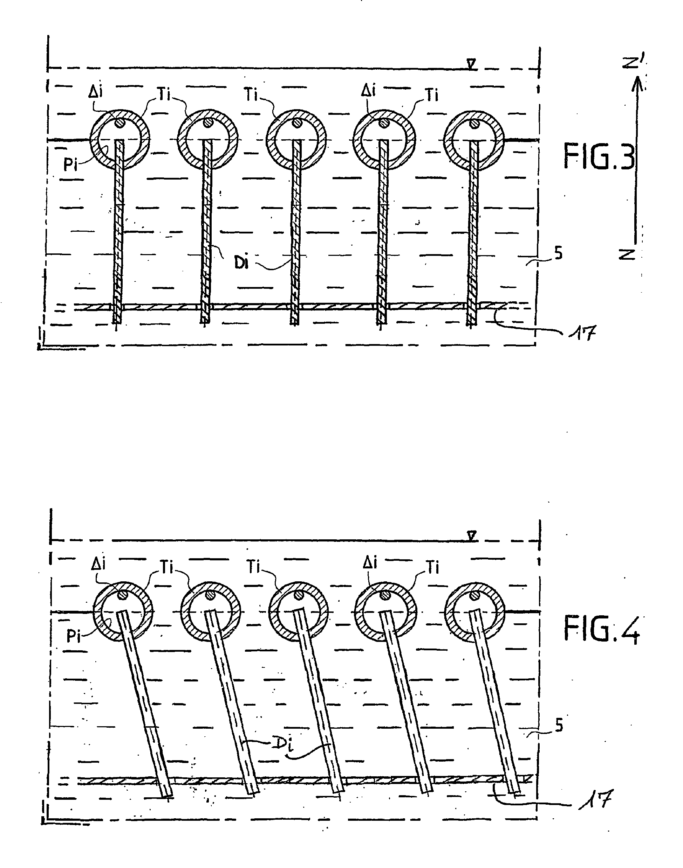

On notera également que l'on prévoit de préférence, comme cela est visible sur les figures 2 et 3, au moins une barre 17, et deux préférences deux barres parallèles entre elles, s'étendant dans la zone inférieure 9 du réservoir 3.

Ces barres 17 sont reliées à chaque plaque Di par une liaison Li de type pivot glissant, de manière qu'un déplacement purement horizontal (c'est-à-dire parallèlement et à distance constante du fond du réservoir 3) de ces barres entraîne une variation d'inclinaison des plaques Di, par exemple pour passer d'une position dite « de fonctionnement » représentée à la figure 2, dans laquelle les plaques Di sont inclinées par rapport à la verticale ZZ', à une première position dite « de nettoyage » représentée à la figure 3, dans laquelle les plaques Di sont sensiblement parallèles à cette verticale, ou à une deuxième position de nettoyage représentée à la figure 4, dans laquelle les plaques Di sont inclinées à l'envers par rapport à leur position de fonctionnement (c'est-à-dire selon une direction sensiblement symétrique par rapport à la verticale).

On va a présent décrire le fonctionnement et les avantages du décanteur selon l'invention.

Le trajet du liquide à décanter lorsque le décanteur est en fonctionnement est indiqué sur les figures 1 et 2 par des flèches.

Comme cela est visible sur la figure 1, le liquide à décanter 5 commence par entrer par la conduite d'arrivée de liquide 7 de manière à rejoindre la zone inférieure 9 du réservoir 3.

Ensuite, comme cela est visible sur la figure 2, le liquide à décanter 5 monte dans les passages Πi, puis circule entre les organes tubulaires Ti jusqu'à la zone supérieure 13 du réservoir 3, puis est évacué de ce réservoir par la gouttière 15 et par la conduite 11.

Lors de la circulation ascendante du liquide 5 le long des plaques Di, les matières en suspension dans ce liquide se déposent sur les plaques Di, puis glissent en majorité vers le fond du réservoir 3.

On a pu constater que la décantation demeurait tout à fait satisfaisante même en l'absence de moyens de calibrage à la sortie des passages IIi.

Une fraction des matières en suspension demeure toutefois collée sur les plaques Di, formant un dépôt ou « boue », de sorte qu'il est nécessaire d'arrêter périodiquement les opérations de décantation et de procéder à un nettoyage des plaques Di.

Pour ce faire, on peut actionner les barres 17 de manière à amener les plaques Di de la position inclinée représentée sur la figure 2 à la position verticale représentée sur la figure 3.

Une fois que les plaques Di se trouvent en position sensiblement verticale, la boue collée sur ces plaques tombe sous l'effet de son propre poids au fond du réservoir 3.

Si nécessaire, on peut incliner les plaques Di « à l'envers » comme représenté à la figure 4 de manière à faire tomber la boue récalcitrante.

On peut en outre introduire par exemple un jet d'eau entre les plaques Di pour faire partir le reliquat de boue collée sur ces plaques.

Comme on peut le comprendre à présent, le décanteur lamellaire selon l'invention permet d'obtenir de bons résultats tout en étant d'une conception très simplifiée par rapport à l'état de la technique.

L'articulation de type pendulaire des premiers organes tubulaires Ti sur les parois du réservoir 3 permet de diminuer les frottements apparaissant lors du pivotement des plaques Di, et ainsi d'alléger au maximum la structure permettant d'actionner ces plaques, à savoir les barres 17.

Cette diminution des frottements rend également possible l'utilisation de simples liaisons Li du type à pivot glissant, grâce auxquelles les barres 17 peuvent se déplacer à distance constante du fond du réservoir 3.

En l'absence de moyens de calibrage au-dessus des plaques de décantation, on peut obtenir une excursion plus importante de ces plaques dans leur mouvement de rotation.

On peut donc amener ces plaques quasiment jusqu'à une position sensiblement parallèle à l'horizontale, ce qui peut s'avérer très utile pour traiter des liquides décantant mal.

Bien entendu, la présente invention n'est pas limitée au mode de réalisation décrit et représenté, fourni à titre d'exemple illustratif et non limitatif.

## Revendications

1. Décanteur lamellaire (1) du type comprenant a) un réservoir (3) de liquide à décanter (5), b) des moyens (7) pour amener ledit liquide (5) dans une zone inférieure (9) dudit réservoir (3), c) des moyens (11) pour évacuer ledit liquide (5) d'une zone supérieure (13) dudit réservoir (3), d) une pluralité de plaques de décantation (Di) disposées à l'intérieur dudit réservoir (3), ces plaques (Di) étant parallèles et régulièrement espacées entre elles de manière à définir une pluralité de passages(πi) s'étendant entre lesdites zones inférieure (9) et supérieure (13), e) des organes tubulaires (Ti) solidaires desdites plaques (Di) et parallèles à ces plaques, et f) des moyens de fixation pendulaires(Δi) interposés entre lesdits organes tubulaires (Ti) et ledit réservoir (3), **caractérisé en ce que** lesdits moyens de fixation pendulaires comprennent des doigts (Δi) solidaires des parois dudit réservoir (3), sur lesquels reposent les parois intérieures (Pi) de chacun desdits organes tubulaires (Ti) afin de relier les organes tubulaires (Ti) aux parois du réservoir (3) de manière pendulaire

2. Décanteur (1) selon la revendication 1, **caractérisé en ce qu'**il comprend des moyens pour calibrer le flux dudit liquide entre lesdits passages (πi)et ladite zone supérieure (13).

3. Décanteur (1) selon l'une des revendications 1 ou 2, **caractérisé en ce qu'**il comprend des moyens (Δi, 17) pour faire varier de concert l'inclinaison desdites plaques de décantation (Di).

4. Décanteur (1) selon la revendication 3, **caractérisé en ce que** lesdits moyens de variation d'inclinaison comprennent au moins une barre d'actionnement (17) reliée par une liaison du type pivot glissant auxdites plaques de décantation (Di).

5. Procédé de nettoyage d'un décanteur (1) conforme à l'une quelconque des revendications précédentes, **caractérisé en ce qu'**il comprend l'étape consistant à placer lesdites plaques de décantation(Di) dans une position sensiblement parallèle à la verticale.

6. Procédé de nettoyage d'un décanteur (1) conforme à l'une quelconque des revendications 1 à 5, **caractérisé en ce qu'**il comprend l'étape consistant à incliner lesdites plaques de décantation (Di) à l'envers par rapport à leur position de fonctionnement.

## Claims

1. Lamellar clarifier (1) of the type comprising a) a tank (3) for liquid to be clarified (5), b) means (7) for conducting said liquid (5) into a lower region (9) of said tank (3), c) means (11) for evacuating said liquid (5) from an upper region (13) of said tank (3), d) a plurality of clarifier plates (Di) disposed inside said tank (3), said plates (Di) being parallel and regularly spaced to define a plurality of passages (πi) between said lower region (9) and said upper region (13), e) tubular members (Ti) fastened to said plates (Di) and parallel to said plates, and (f) pendular fixing means (Δi) between said tubular members (Ti) and said tank (3), **characterized in that** said pendular fixing means comprise fingers (Δi) fastened to the walls of said tank (3), on which the inside walls (Pi) of each of said tubular members (Ti) rest in order to connect the tubular members (Ti) to the walls of the tank (3) in a pendular manner.

2. Clarifier (1) according to claim 1, **characterized in that** it comprises means for calibrating the flow of said liquid between said passages (πi) and said upper region 13).

3. Clarifier (1) according to either claim 1 or claim 2, **characterized in that** it further comprises means (Δi, 17) for varying conjointly the inclination of said clarifier plates (Di).

4. Clarifier (1) according to claim 3, **characterized in that** said inclination variation means comprise at least one actuation bar (17) connected by a sliding pivot type link to said clarifier plates (Di).

5. Method of cleaning a clarifier (1) conforming to any of preceding claims **characterized in that** it comprises a step consisting in placing said clarifier plates (Di) in a position substantially parallel to the vertical.

6. Method of cleaning a clarifier (1) conforming to any of claims 1 to 5, **characterized in that** it comprises the step of oppositely inclining said clarifier plates (Di) relative to their operating position.

## Patentansprüche

1. Lamellen-Dekanter (1) von der Art, die aufweist: a) ein Reservoir (3) für zu dekantierende Flüssigkeit (5), b) Mittel (7) zum Bringen der Flüssigkeit (5) in einen unteren Bereich (9) des Reservoirs (3), c) Mittel (11) zum Evakuieren der Flüssigkeit (5) aus einem oberen Bereich (13) des Reservoirs (3), d) eine Mehrzahl von Dekantierplatten (Di), die im Inneren des Reservoirs (3) angeordnet sind, wobei diese Platten (Di) parallel und gleichmäßig voneinander beabstandet sind, um eine Mehrzahl an Durchgängen (πi) zu definieren, die sich zwischen dem unteren Bereich (9) und dem oberen Bereich (13) erstrecken, e) rohrförmige Elemente (Ti), die mit den Platten (Di) fest verbunden und parallel zu diesen Platten sind, und f) pendelartige Befestigungsmittel ()i), die zwischen den rohrförmigen Elementen (Ti) und dem Reservoir (3) angeordnet sind, **dadurch gekennzeichnet, dass** die pendelartigen Befestigungsmittel Finger ()i) aufweisen, die mit den Wänden des Reservoirs (3) fest verbunden sind, auf denen die Innenwände (Pi) jedes der rohrförmigen Elemente (Ti) ruhen, um die rohrförmigen Elemente (Ti) mit den Wänden des Reservoirs (3) pendelartig zu verbinden.

2. Dekanter (1) nach Anspruch 1, **dadurch gekennzeichnet, dass** er Mittel zum Kalibrieren des Flusses der Flüssigkeit zwischen den Durchgängen (πi) und dem oberen Bereich (13) aufweist.

3. Dekanter (1) nach einem der Ansprüche 1 oder 2, **dadurch gekennzeichnet, dass** er Mittel ()i, 17) aufweist, um die Neigung der Dekantierplatten (Di) in Übereinstimmung variieren zu lassen.

4. Dekanter (1) nach Anspruch 3, **dadurch gekennzeichnet, dass** die Mittel zum Variieren der Neigung zumindest eine Betätigungsstange (17) aufweisen, die über eine Verbindung von der Art eines Gleitgelenks mit den Dekantierplatten (Di) verbunden ist.

5. Verfahren zum Reinigen eines Dekanters (1) gemäß einem der vorhergehenden Ansprüche, **dadurch gekennzeichnet, dass** es den Schritt aufweist, die Dekantierplatten (Di) in einer zur Vertikalen etwa parallelen Stellung anzuordnen.

6. Verfahren zum Reinigen eines Dekanters (1) gemäß einem der Ansprüche 1 bis 5, **dadurch gekennzeichnet, dass** es den Schritt aufweist, die Dekantierplatten (Di) umgekehrt zu ihrer Betriebsstellung zu neigen.
